# EUROPÄISCHE PATENTSCHRIFT

(11) **EP 3 233 596 B1**
(45) Veröffentlichungstag und Bekanntmachung des Hinweises auf die Patenterteilung: **12.09.2018**
(21) Anmeldenummer: 15813297.7
(22) Anmeldetag: 08.12.2015
(51) Int. Cl.: B60T 8/40

(54) **BREMSANLAGE FÜR EIN KRAFTFAHRZEUG**
BRAKING SYSTEM FOR A MOTOR VEHICLE
SYSTÈME DE FREINAGE D'UN VÉHICULE AUTOMOBILE

(30) Priorität: 16.12.2014 DE 102014225958
(43) Veröffentlichungstag der Anmeldung: 25.10.2017
(73) Patentinhaber: Continental Teves AG & Co. OHG, 60488 Frankfurt (DE)
(72) Erfinder: BESIER, Marco, 65307 Bad Schwalbach (DE); DRUMM, Stefan, 55291 Saulheim (DE); LINHOFF, Paul, 61267 Neu-Anspach (DE)
(86) Internationale Anmeldenummer: PCT/EP2015/078947
(87) Internationale Veröffentlichungsnummer: WO 2016/096533

(56) Entgegenhaltungen:
- EP-A1- 2 641 799
- WO-A1-2012/150120
- DE-A1- 4 014 052
- DE-A1-102012 205 861
- DE-A1-102012 210 809

## Beschreibung

Die Erfindung betrifft eine Bremsanlage für ein Kraftfahrzeug gemäß dem Oberbegriff von Anspruch 1.

Es sind hydraulische Fahrzeugbremsanlagen bekannt, welche als Fremdkraftbremsanlagen ausgebildet sind und neben einem muskelkraftbetätigbaren Hauptbremszylinder, an den Radbremsen hydraulisch angeschlossen sind und der Druck und Volumen zum Betätigen von Radbremsen bereitstellt, eine weitere, elektrisch steuerbare Druck- und Volumenbereitstellungseinrichtung umfassen, die in einer "Brake-by-wire"-Betriebsart die Radbremsen ansteuert. Bei Ausfall der elektrisch steuerbaren Druck- und Volumenbereitstellungseinrichtung erfolgt eine Betätigung der Radbremsen allein durch die Muskelkraft des Fahrzeugführers.

Es ist zu erwarten, dass zukünftig auch Fahrzeugbremssysteme zum Einsatz kommen werden, welche für automatisch fahrende Fahrzeuge geeignet sind. Diese Bremssysteme müssen grundsätzlich fremdansteuerbare Systeme oder "Brake-by-wire"-Systeme sein. Dies bedeutet, dass eine Bremsanforderung über elektronische oder elektrische Steuersignale angefordert und vom System ohne Zutun des Fahrers umgesetzt werden kann. Hierbei muss aus Sicherheitsgründen eine ausreichend hohe Verfügbarkeit des Bremssystems bzw. der fremdansteuerbaren Bremsfunktion gewährleistet sein.

In der DE 10 2012 205 861 A1 wird eine "Brake-by-wire"-Bremsanlage beschrieben, welche neben einem bremspedalbetätigbaren Hauptbremszylinder eine erste und eine zweite Druckbereitstellungseinrichtung umfasst. Die zweite Druckbereitstellungseinrichtung ist dazu eingerichtet, in jedem der Bremskreise den Druck zur Versorgung der Radbremsen gegenüber dem vom Hauptbremszylinder gelieferten Druck anzuheben. So kann der Fahrzeugführer trotz Ausfall der ersten Druckbereitstellungseinrichtung eine ausreichende Betriebsbremsverzögerung komfortabel erreichen. Der Hauptbremszylinder, die erste Druckbereitstellungseinrichtung, die Trennventile, die Zuschaltventile und die Simulationseinrichtung mit dem Simulatorfreigabeventil sind in dem ersten Modul mit der ersten elektronischen Steuer- und Regeleinheit und die zweite Druckbereitstellungseinrichtung, die Einlass- und Auslassventile sind in dem zweiten Modul mit der zweiten elektronischen Steuer- und Regeleinheit angeordnet. Es ist genau ein Druckmittelvorratsbehälter vorgesehen, welcher an dem ersten Modul angeordnet ist. Die Saugseiten der Pumpen der zweiten Druckbereitstellungseinrichtung des zweiten Moduls sind ebenfalls mit diesem Druckmittelvorratsbehälter hydraulisch verbunden. Im Falle einer kleinen Leckage in der hydraulischen Verbindung zwischen dem zweiten Modul und dem am ersten Modul angeordneten Druckmittelvorratsbehälter könnte die Leckage durch die Behälterwarneinrichtung des Druckmittelvorratsbehälters nicht schnell genug erkannt werden, so dass die Pumpe der zweiten Druckbereitstellungseinrichtung über die kleine Leckage Luft ansaugt und so die beiden Bremskreise mit Luft verunreinigt. Weiterhin sind die Druckanschlüsse der zweiten Druckbereitstellungseinrichtung mit den eingangsseitigen Anschlüssen der Einlassventile der Radbremsen verbunden, so dass die Einlassventile zwischen dem jeweiligen Druckanschluss der zweiten Druckbereitstellungseinrichtung und der Radbremse angeordnet sind. Aufgrund der Drosselwirkung der Einlassventile kann es zu einer Behinderung des von der zweiten Druckquelle an die Radbremse abgegebenen Druckmittelflusses kommen.

In der WO 2012/150120 A1 wird eine Bremsanlage mit einem ersten elektrohydraulischen Modul, welches einen mittels eines Bremspedals betätigbaren Hauptbremszylinder, eine elektrisch steuerbare Druckbereitstellungseinrichtung und eine elektrisch steuerbare Druckmodulationseinrichtung zum Einstellen radindividueller Bremsdrücke umfasst, beschrieben, wobei an dem ersten Modul ein unter Atmosphärendruck stehender Druckmittelvorratsbehälter angeordnet ist. Die Bremsanlage umfasst weiterhin ein Verstärkungsmodul, welches eine zweite elektrisch steuerbare Druckbereitstellungseinrichtung und elektrisch betätigbare Ventile umfasst, wobei die zweite Druckbereitstellungseinrichtung zwei, von einem Elektromotor gemeinsam angetriebene hydraulische Pumpen mit je einem Sauganschluss und einem Druckanschluss umfasst. Die Saugseiten der Pumpen sind an einen oder mehrere Druckmittelbehälter angeschlossen. Die Druckanschlüsse der Pumpen sind über eine Trennventil und ein Einlassventil mit den Radbremsen verbunden, so dass es zu einer Behinderung des von der zweiten Druckbereitstellungseinrichtung an die Radbremse abgegebenen Druckmittelflusses kommen kann.

Es ist Aufgabe der vorliegenden Erfindung, eine Bremsanlage für ein Kraftfahrzeug bereitzustellen, welche hohe Anforderungen bezüglich der Verfügbarkeit der Bremsanlage erfüllt. Insbesondere sollen durch die Bremsanlage die Sicherheitsanforderungen des hochautomatisierten Fahrens oder des autonomen Fahrens erfüllt werden.

Diese Aufgabe wird erfindungsgemäß durch eine Bremsanlage gemäß Anspruch 1 gelöst.

Der Erfindung liegt der Gedanke zugrunde, dass die Bremsanlage neben einer ersten elektrohydraulischen Steuer- und Regeleinheit mit einer ersten elektrisch steuerbaren Druckbereitstellungseinrichtung und einem an der ersten elektrohydraulischen Steuer- und Regeleinheit angeordneten ersten Druckmittelvorratsbehälter zur Versorgung der ersten elektrohydraulischen Steuer- und Regeleinheit eine zweite elektrohydraulische Steuer- und Regeleinheit mit einer zweiten elektrisch steuerbaren Druckbereitstellungseinrichtung und einen an der zweiten elektrohydraulischen Steuer- und Regeleinheit angeordneten zweiten Druckmittelvorratsbehälter zur Versorgung der zweiten elektrohydraulischen Steuer- und Regeleinheit umfasst.

Die zweite Druckbereitstellungseinrichtung umfasst zumindest zwei, von einem Elektromotor gemeinsam angetriebene hydraulische Pumpen mit je einem Sauganschluss und einem Druckanschluss, wobei jeder der Druckanschlüsse mit einer der Radbremse ohne Zwischenschaltung eines Ventils verbunden ist. Dies bedeutet, dass der Druckanschluss direkt, d.h. ohne Zwischenschaltung eines Ventils oder über eine weitere hydraulische Komponente, mit der Radbremse verbunden. Hierdurch werden Drosseleffekte vermieden.

Jeder der Druckanschlüsse der Pumpen ist bevorzugt mit genau einer Radbremse verbunden. Vorteilhafterweise handelt es sich bei den Radbremsen um die Radbremsen der Vorderräder.

Ein Vorteil der Erfindung liegt darin, dass die Verfügbarkeit einer fremdangesteuerten bzw. elektrisch gesteuerten Bremsung erhöht wird. Im Fall einer Leckage im Bereich einer Ansaugleitung einer der Druckbereitstellungseinrichtungen kann eine Bremsung weiterhin mittels der anderen Druckbereitstellungseinrichtung durchgeführt werden, ohne dass die Bremskreise mit Luft verunreinigt werden.

Gemäß einer bevorzugten Weiterbildung der Erfindung umfassen der erste Druckmittelvorratsbehälter und der zweite Druckmittelvorratsbehälter jeweils eine Füllstandserfassungseinrichtung oder eine Füllstandswarneinrichtung. Hierdurch können die erste elektrohydraulische Steuer- und Regeleinheit und die zweite elektrohydraulische Steuer- und Regeleinheit getrennt voneinander auf einen Verlust von Druckmittel überwacht werden. Wird ein Druckmittelverlust in einer der elektrohydraulischen Steuer- und Regeleinheiten erkannt, so kann nur diese elektrohydraulische Steuer- und Regeleinheit deaktiviert werden.

Bevorzugt ist der zweite Druckmittelvorratsbehälter derart aufgebaut, dass er als Luftabscheider wirkt. So wird selbst dann, wenn eine Leckage im Bereich einer Ansaugleitung der zweiten elektrohydraulische Steuer- und Regeleinheit vorhanden ist, ein Ansaugen von Luft und eine Verunreinigung der Bremskreise zunächst verhindert.

Bevorzugt umfasst die erste elektrohydraulische Steuer- und Regeleinheit eine erste elektronische Steuer- und Regeleinheit und eine erste hydraulische Steuer- und Regeleinheit.

Bevorzugt umfasst die zweite elektrohydraulische Steuer- und Regeleinheit eine zweite elektronische Steuer- und Regeleinheit und eine zweite hydraulische Steuer- und Regeleinheit.

Bevorzugt ist die Bremsanlage in einer "Brake-by-wire"-Betriebsart sowohl vom Fahrzeugführer als auch unabhängig vom Fahrzeugführer, besonders bevorzugt im Rahmen einer autonomen Fahrfunktion, ansteuerbar. Bevorzugt wird die Bremsanlage normalerweise in der "Brake-by-wire"-Betriebsart betrieben und kann in mindestens einer Rückfallbetriebsart betrieben werden.

Zur weiteren Erhöhung der Verfügbarkeit der Bremsanlage sind bevorzugt eine erste elektrische Energieversorgungseinheit und eine zweite elektrische Energieversorgungseinheit, welche von der ersten Energieversorgungseinheit unabhängig ist, vorgesehen, wobei die erste elektrohydraulische Steuer- und Regeleinheit von der ersten Energieversorgungseinheit mit elektrischer Energie versorgt wird und die zweite elektrohydraulische Steuer- und Regeleinheit von der zweiten Energieversorgungseinheit mit elektrischer Energie versorgt wird. Bei Ausfall einer der Energieversorgungseinheiten kann weiterhin eine elektrisch gesteuerte Bremsung durchgeführt werden.

Bevorzugt ist die erste Druckbereitstellungseinrichtung zur Betätigung der Radbremsen der Bremsanlage ausgebildet, wohingegen die zweite Druckbereitstellungseinrichtung nur zur Betätigung eines Teils der Radbremsen ausgebildet ist.

Bevorzugt sind der erste Druckmittelvorratsbehälter und der zweite Druckmittelvorratsbehälter baulich getrennt ausgeführt.

Die erste elektrohydraulische Steuer- und Regeleinheit und die zweite elektrohydraulische Steuer- und Regeleinheit sind bevorzugt im Kraftfahrzeug beabstandet angeordnet.

Die Druckanschlüsse der Pumpen sind bevorzugt mit einer Verbindungsleitung zwischen der Radbremse und dem ausgangsseitigen Anschluss des zugehörigen Einlassventils verbunden.

Zur Erhöhung der Verfügbarkeit sind die Druckanschlüsse der Pumpen bevorzugt mit Radbremse unterschiedlicher Hauptbremszylinder-Bremskreise verbunden.

Bevorzugt umfasst der zweite Druckmittelvorratsbehälter einen hydraulischen Anschluss, wobei die Sauganschlüsse der zweiten Druckbereitstellungseinrichtung mit dem Anschluss verbunden sind.

Alternativ ist es bevorzugt, dass der zweite Druckmittelvorratsbehälter einen ersten hydraulischen Anschluss und einen zweiten hydraulischen Anschluss umfasst, wobei der erste Anschluss mit dem Sauganschluss der einen Pumpe und der zweite Anschluss mit dem Sauganschluss der anderen Pumpe verbunden ist.

Bevorzugt sind die Sauganschlüsse der zweiten Druckbereitstellungseinrichtung über je ein in Richtung des Sauganschlusses öffnendes Rückschlagventil mit dem Anschluss verbunden.

Gemäß einer bevorzugten Weiterbildung der Erfindung ist ein dritter, vorteilhafterweise unter Atmosphärendruck stehender, Druckmittelvorratsbehälter, der eine Befüllöffnung umfasst, zur Versorgung des ersten und des zweiten Druckmittelvorratsbehälters mit Druckmittel vorgesehen, welcher mit dem ersten und dem zweiten Druckmittelvorratsbehälter verbunden ist.

Alternativ umfasst der erste Druckmittelvorratsbehälter eine Befüllöffnung und ist zur Versorgung des zweiten Druckmittelvorratsbehälters mit Druckmittel mit dem zweiten Druckmittelvorratsbehälter verbunden.

Bevorzugt umfasst die Bremsanlage je Druckraum des Hauptbremszylinders ein elektrisch betätigbares, vorteilhafterweise stromlos offenes, Trennventil zur hydraulischen Verbindung oder Trennung des Hauptbremszylinders von den dem Druckraum zugeordneten Radbremsen. Das Trennventil ist jeweils besonders bevorzugt in einer hydraulischen Verbindungsleitung zwischen dem Druckraum des Hauptbremszylinders und einem die zugeordneten Einlassventile mit Druck versorgenden Bremskreisabschnitt angeordnet und ermöglicht so ein wahlweises Verschließen oder Öffnen der hydraulischen Verbindung zwischen Druckraum und Bremskreisabschnitt.

Die Bremsanlage umfasst bevorzugt je Druckraum des Hauptbremszylinders ein elektrisch betätigbares, vorteilhafterweise stromlos geschlossenes, Zuschaltventil zur hydraulischen Verbindung oder Trennung der ersten Druckbereitstellungseinrichtung von den Radbremsen. Das Zuschaltventil ist besonders bevorzugt jeweils in einer hydraulischen Verbindungsleitung zwischen der ersten Druckbereitstellungseinrichtung und dem Bremskreisabschnitt angeordnet und ermöglicht so ein wahlweises Öffnen oder Verschließen der hydraulischen Verbindung zwischen erster Druckbereitstellungseinrichtung und Bremskreisabschnitt.

Die Bremsanlage umfasst bevorzugt eine Simulationseinrichtung, welche in der "Brake-by-wire"-Betriebsart dem Fahrzeugführer ein angenehmes Bremspedalgefühl vermittelt. Die Simulationseinrichtung ist besonders bevorzugt mittels eines elektrisch oder mechanisch betätigbaren Simulatorfreigabeventils hydraulisch mit zumindest einem Druckraum des Hauptbremszylinders verbindbar.

Eine erste elektronische Steuer- und Regeleinheit ist bevorzugt zur Ansteuerung der ersten elektrisch steuerbaren Druckbereitstellungseinrichtung im Sinne einer Regelung oder Steuerung des von ihr abgegebenen hydraulischen Druckes ausgebildet. Weiterhin werden durch die erste elektronische Steuer- und Regeleinheit vorteilhafterweise die Trennventile und Zuschaltventile, das Simulatorfreigabeventil und die Druckmodulationseinrichtung der Bremsanlage geregelt bzw. gesteuert.

Bevorzugt umfasst die Druckmodulationseinrichtung zum Einstellen radindividueller Bremsdrücke für jede Radbremse ein elektrisch betätigbares Einlassventil und ein elektrisch betätigbares Auslassventil.

Bevorzugt wird die erste elektrisch steuerbare Druckbereitstellungseinrichtung durch eine Zylinder-Kolben-Anordnung gebildet, deren Kolben durch einen elektromechanischen Aktuator betätigbar ist. Ein solcher elektrohydraulischer Aktuator arbeitet besonders dynamisch, sehr leise und verträgt problemlos die für Bremsanlagen erforderlichen Lastwechselzahlen.

Weitere bevorzugte Ausführungsformen der Erfindung ergeben sich aus den Unteransprüchen und der nachfolgenden Beschreibung anhand von Figuren.

Es zeigt schematisch
- Fig. 1: ein erstes Ausführungsbeispiel einer erfindungsgemäßen Bremsanlage, und
- Fig. 2: ein zweites Ausführungsbeispiel einer erfindungsgemäßen Bremsanlage.

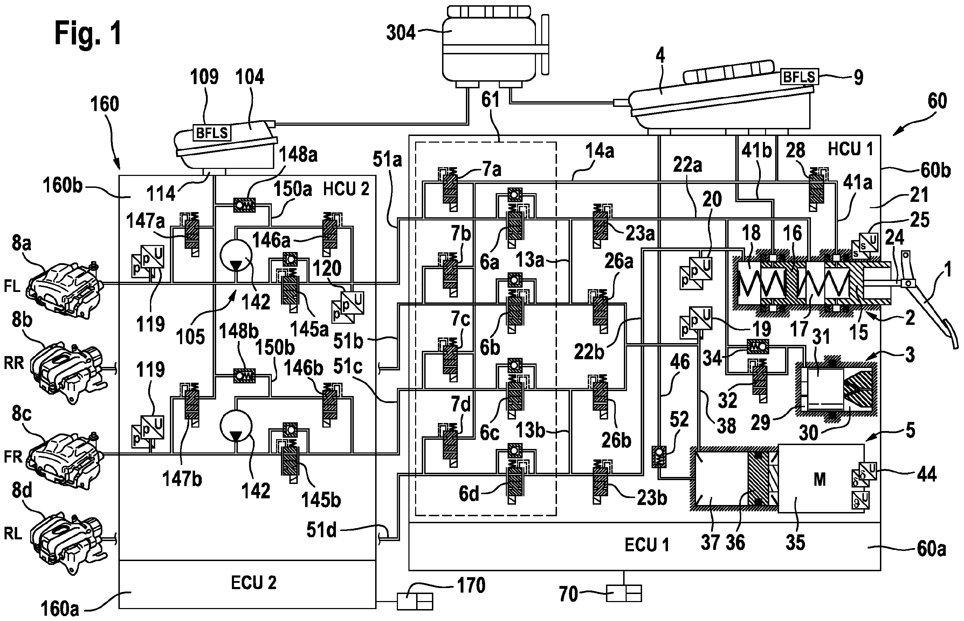

In Fig. 1 ist ein erstes Ausführungsbeispiel einer erfindungsgemäßen Bremsanlage schematisch dargestellt. Die Bremsanlage umfasst im Wesentlichen eine erste elektrohydraulische Steuer- und Regeleinheit 60 und eine zweite elektrohydraulische Steuer- und Regeleinheit 160. Diese sind als getrennte Baueinheiten bzw. eigenständige Baugruppen ausgeführt.

Die erste elektrohydraulische Steuer- und Regeleinheit 60 umfasst eine erste elektronische Steuer- und Regeleinheit 60a (ECU1) und eine erste hydraulische Steuer- und Regeleinheit 60b (HCU1). In der ersten hydraulischen Steuer- und Regeleinheit 60b sind im Wesentlichen ein mittels eines Bremspedals 1 betätigbarer Hauptbremszylinder 2, eine mit dem Hauptbremszylinder 2 zusammen wirkende Simulationseinrichtung 3, eine erste elektrisch steuerbare Druckbereitstellungseinrichtung 5 und eine elektrisch steuerbare Druckmodulationseinrichtung 61 zum Einstellen radindividueller Bremsdrücke angeordnet.
An der ersten elektrohydraulischen Steuer- und Regeleinheit 60 ist ein erster, unter Atmosphärendruck stehender Druckmittelvorratsbehälter 4 zur Versorgung der ersten elektrohydraulischen Steuer- und Regeleinheit 60 mit Druckmittel angeordnet.

Die zweite elektrohydraulische Steuer- und Regeleinheit 160 umfasst eine zweite elektronische Steuer- und Regeleinheit 160a (ECU2) und eine zweite hydraulische Steuer- und Regeleinheit 160b (HCU2). In der zweiten hydraulischen Steuer- und Regeleinheit 160b sind im Wesentlichen eine zweite elektrisch steuerbare Druckbereitstellungseinrichtung 105 und elektrisch betätigbare Ventile 145a, 145b, 146a, 146b, 147a, 147b angeordnet.

An der zweiten elektrohydraulischen Steuer- und Regeleinheit 160 ist ein zweiter, unter Atmosphärendruck stehender Druckmittelvorratsbehälter 4 zur Versorgung der zweiten elektrohydraulischen Steuer- und Regeleinheit 160 mit Druckmittel angeordnet.

Beispielsgemäß ist ein dritter, unter Atmosphärendruck stehender Druckmittelvorratsbehälter 304 vorhanden, welcher mit dem ersten Druckmittelvorratsbehälter 4 und dem zweiten Druckmittelvorratsbehälter 104 verbunden ist und diese als eine Art Hauptbehälter mit Druckmittel versorgt. Der dritte Druckmittelvorratsbehälter 304 umfasst eine Befüllöffnung zum Befüllen der Bremsanlage mit Druckmittel bei Wartungsvorgängen.

Alternativ kann auch der an der ersten elektrohydraulischen Steuer- und Regeleinheit 60 angeordnete erste Druckmittelvorratsbehälter als Hauptbehälter mit einer Befüllöffnung ausgeführt sein, der den zweiten Druckmittelvorratsbehälter 104 mit Druckmittel versorgt.

Vorteilhafterweise ist für den ersten Druckmittelvorratsbehälter 4 und für den zweiten Druckmittelvorratsbehälter 104 jeweils eine Füllstandserfassungseinrichtung 9, 109 bzw. eine Füllstandswarneinrichtung vorgesehen, mittels welcher jeweils der Druckmittelfüllstand bzw. ein Fallen des Druckmittelfüllstandes unter ein vorgegebenen Niveau des jeweiligen Druckmittelvorratsbehälters 4, 104 erfasst wird. So kann der Verlust von Druckmittel an der zweiten elektrohydraulischen Steuer- und Regeleinheit 160 separat von einem Druckmittelverlust an der ersten elektrohydraulischen Steuer- und Regeleinheit 60 sensiert werden. Auch kann umgekehrt durch die Füllstandserfassungseinrichtung 9 des Druckmittelvorratsbehälters 4 der Verlust von Druckmittel an der ersten Steuer- und Regeleinheit 60 erkannt werden. So lassen sich die jeweiligen Steuer- und Regeleinheiten 60, 160 entsprechend getrennt voneinander auf derartige Leckagefehler sensieren. Im Falle einer Leckage kann dann die betroffene Steuer- und Regeleinheit deaktiviert werden, während die andere Steuer- und Regeleinheit weiterhin zur Durchführung von Bremsungen weiterhin bereit steht.

In dem Falle, dass nur ein Druckmittelvorratsbehälter für beide Steuer- und Regeleinheiten 60, 160 vorgesehen wäre, müssten bei Erkennung einer Leckage am Druckmittelvorratsbehälter beide Steuer- und Regeleinheiten 60, 160 deaktiviert werden. Ein fremdangesteuerter oder elektrisch gesteuerter Aufbau von Bremsdruck wäre dann gar nicht möglich.

Vorteilhafterweise ist der Druckmittelvorratsbehälter 104 der zweiten Steuer- und Regeleinheiten 160 derart ausgeführt, dass der Druckmittelvorratsbehälter 104, z.B. aufgrund seiner Geometrie, als Luftabscheider wirkt. D.h., dass in der Saugleitung vorhandene Luft sich beim Ansaugen der Pumpen 142 in dem Druckmittelvorratsbehälter 104 absetzen kann. Die Luft gelangt aber nicht weiter zu den Pumpen142, zumindest nicht bevor die Füllstandserfassungseinrichtung 109 bzw. Füllstandswarneinrichtung einen niedrigen Füllstand anzeigt.

Druckmodulationseinrichtung 61 umfasst zumindest ein elektrisch betätigbares Einlassventil 6a-6d für jede Radbremse. Beispielsgemäß umfasst die Druckmodulationseinrichtung 61 je Radbremse 8a-8d eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8a-8d angeschlossen sind. Die Eingangsanschlüsse der Einlassventile 6a-6d werden über Bremskreisabschnitte 13a, 13b mit Drücken versorgt, die in einer "Brake-by-Wire"-Betriebsart aus einem Systemdruck abgeleitet werden, der in einer an einen Druckraum 37 der ersten elektrisch steuerbaren Druckbereitstellungseinrichtung 5 angeschlossenen Systemdruckleitung 38 vorliegt. Den Einlassventilen 6a-6d ist jeweils ein zu den Bremskreisabschnitten 13a, 13b hin öffnendes, nicht näher bezeichnetes Rückschlagventil parallel geschaltet. In einer Rückfallbetriebsart können die Bremskreisabschnitte 13a, 13b über hydraulische Leitungen 22a, 22b mit einem Druck des Hauptbremszylinders 2 beaufschlagt werden. Die Ausgangsanschlüsse der Auslassventile 7a-7d sind über eine Rücklauf leitung 14a mit dem ersten Druckmittelvorratsbehälter 4 verbunden. Zum Erfassen des in der Systemdruckleitung 38 herrschenden Druckes ist ein vorzugsweise redundant ausgeführter Drucksensor 19 vorgesehen. Beispielsgemäß sind die Radbremsen 8a bzw. 8b dem linken Vorderrad FL bzw. dem rechten Hinterrad RR und die Radbremsen 8c bzw. 8d dem rechten Vorderrad FR bzw. dem linken Hinterrad RL zugeordnet (sog. Diagonalaufteilung).

Hauptbremszylinder 2 weist in einem Gehäuse 21 zwei hintereinander angeordnete Kolben 15, 16 auf, die Druckräume 17, 18 begrenzen. Die Druckräume 17, 18 stehen einerseits über in den Kolben 15, 16 ausgebildete radiale Bohrungen sowie entsprechende Druckausgleichsleitungen 41a, 41b mit dem ersten Druckmittelvorratsbehälter 4 in Verbindung (die Druckausgleichsleitung 41a ist abschnittsweise zusammengefasst mit der Rücklaufleitung 14a dargestellt, getrennte Leitungen sind jedoch auch möglich), wobei die Verbindungen durch eine Relativbewegung der Kolben 15, 16 im Gehäuse 21 absperrbar sind. Andererseits stehen die Druckräume 17, 18 mittels der hydraulischen Leitungen 22a, 22b mit den bereits genannten Bremskreisabschnitten 13a, 13b in Verbindung. In der Druckausgleichsleitung 41a ist ein stromlos offenes (SO-) Diagnoseventil 28 angeordnet. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.
In den hydraulischen Verbindungen 22a, 22b ist je ein Trennventil 23a, 23b angeordnet, mittels welchen die Druckräume 17, 18 von den Bremskreisabschnitten 13a, 13b hydraulisch trennbar sind.

Durch die Trennventile 23a, 23b kann also die hydraulische Verbindung zwischen dem Hauptbremszylinder 2 und den Radbremsen 8a-8d abgesperrt werden. Die Trennventile 23a, 23b sind als elektrisch betätigbare, vorzugsweise stromlos offene (SO-), 2/2-Wegeventil ausgebildet. Ein an den Leitungsabschnitt 22b angeschlossener Drucksensor 20 erfasst den im Druckraum 18 durch ein Verschieben des zweiten Kolbens 16 aufgebauten Druck.

Simulationseinrichtung 3 ist hydraulisch an den Hauptbremszylinder 2 angekoppelt und besteht im Wesentlichen aus einer Simulatorkammer 29, einer Simulatorfederkammer 30 sowie einem die beiden Kammern 29, 30 voneinander trennenden Simulatorkolben 31. Simulatorkolben 31 stützt sich durch ein in Simulatorfederkammer 30 angeordnetes elastisches Element (z.B. eine Feder), welches vorteilhafterweise vorgespannt ist, am Gehäuse 21 ab. Die Simulatorkammer 29 ist beispielsgemäß mittels eines elektrisch betätigbaren Simulatorfreigabeventils 32 mit dem ersten Druckraum 17 des Hauptbremszylinders 2 verbindbar. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Simulationseinrichtung 3 vermittelt in der "Brake-by-wire"-Betriebsart dem Fahrzeugführer ein angenehmes Bremspedalgefühl.

Die erste elektrisch steuerbare Druckbereitstellungseinrichtung 5 ist als eine hydraulische Zylinder-Kolben-Anordnung bzw. ein einkreisiger elektrohydraulischer Aktuator (Linearaktuator) ausgebildet, dessen Kolben 36 von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Erfassen der Temperatur der Motorwicklung verwendet werden. Der Kolben 36 begrenzt den Druckraum 37. Der durch die Kraftwirkung des Kolbens 36 auf das im Druckraum 37 eingeschlossene Druckmittel erzeugte Aktuatordruck wird in die Systemdruckleitung 38 eingespeist und mit dem Systemdrucksensor 19 erfasst. In der "Brake-by-Wire"-Betriebsart wird die Systemdruckleitung 38 über die Zuschaltventile 26a, 26b mit den Bremskreisabschnitten 13a, 13b verbunden. Auf diesem Weg erfolgt bei einer Normalbremsung ein Radbremsdruckauf- und -abbau für alle Radbremsen 8a-8d. Beim Druckabbau strömt dabei das vorher aus dem Druckraum 37 des Aktuators 5 in die Radbremsen 8a-8d verschobene Druckmittel auf dem gleichen Wege wieder in den Druckraum 37 des Aktuators 5 zurück. Dagegen strömt bei einer Bremsung mit radindividuell unterschiedlich, mit Hilfe der Druckmodulationsventile 6a-6d, 7a-7d geregelten Radbremsdrücken der über die Auslassventile 7a-7d abgelassene Druckmittelanteil in den ersten Druckmittelvorratsbehälter 4. Ein Nachsaugen von Druckmittel in den Druckraum 37 ist durch ein Zurückfahren des Kolbens 36 bei geschlossenen Zuschaltventilen 26a, 26b möglich, indem Druckmittel aus dem ersten Vorratsbehälter 4 über eine Verbindungsleitung 46 mit einem als in Strömungsrichtung zum Aktuator öffnenden Rückschlagventil ausgebildeten Nachsaugventil 52 in den Aktuatordruckraum 37 strömt.
Die Ausgangsanschlüsse der Einlassventile 6a-6d der ersten elektrohydraulische Steuer- und Regeleinheit 60 sind über jeweils eine hydraulische Verbindung 51a-51d mit genau einer der Radbremsen 8a-8d verbunden. Dabei ist die zweite elektrohydraulische Steuer- und Regeleinheit 160 beispielsgemäß hydraulisch zwischen der ersten elektrohydraulischen Steuer- und Regeleinheit 60 und den Radbremsen 8a und 8c angeordnet. Die Einlassventile 6b, 6d sind über die hydraulischen Verbindungen 51b, 51d, welche beispielsgemäß außerhalb der Einheit 160 verlaufen, direkt mit den Radbremsen 8b und 8d verbunden. Die zweite elektrohydraulische Steuer- und Regeleinheit 160 ist zur Druckbeaufschlagung bzw. Druckeinstellung an den Radbremsen 8a und 8c ausgeführt. Im Falle eines Ausfalls der ersten Druckbereitstellungseinrichtung 5 kann durch Aktivierung der zweiten Druckbereitstellungseinrichtung 105 Druckmittelvolumen für die Radbremsen 8a und 8c zur Verfügung gestellt werden.

Es ist auch möglich, dass die zweite elektrohydraulische Steuer- und Regeleinheit 160 zur Druckbeaufschlagung bzw. Druckeinstellung an allen Radbremsen 8a, 8b, 8c und 8d ausgeführt ist.

In den Verbindungen 51a und 51c, welche jeweils die Radbremse 8a bzw. 8c mit dem ausgangsseitigen Anschluss des ihr zugeordneten Einlassventils 6a bzw. 6c bzw. mit dem eingangsseitigen Anschluss des ihr zugeordneten Auslassventils 7a bzw. 7c verbindet, ist je Radbremse ein stromlos offen ausgeführtes, vorteilhafterweise analog ansteuerbares, Regelventil 145a, 145b mit einem parallel geschalteten, in Richtung der Radbremse öffnenden Rückschlagventil angeordnet.

Zum Abbau von Radbremsdruck ist weiterhin für jede Radbremse 8a und 8c ein elektrisch betätigbares, insbesondere stromlos geschlossenes, Ablassventil 147a, 147b vorgesehen, mittels welchem die Radbremse mit dem zweiten Druckmittelvorratsbehälter 104 verbindbar ist.

Die zweite elektrohydraulische Steuer- und Regeleinheit 160 umfasst beispielsgemäß als zweite elektrisch steuerbare Druckbereitstellungseinrichtung 105 zwei Pumpen 142, die von einem nicht dargestellten Elektromotor gemeinsam angetrieben werden. Der zweite Druckmittelvorratsbehälter 104 umfasst einen hydraulischen Anschluss 114, mit dem die Sauganschlüsse der Pumpen 142 verbunden sind, wobei in einem Leitungsabschnitt 150a, 150a zwischen Sauganschluss und Anschluss 114 je ein in Richtung des Sauganschlusses öffnendes Rückschlagventil 148a, 148b angeordnet ist. Die Sauganschlüsse der Pumpen 142 sind weiterhin über je ein elektrisch betätigbares, vorteilhafterweise stromlos geschlossenes, Druckmittelzufuhrventil 146a, 146b mit dem zugehörigen Verbindungsabschnitt der Verbindung 51a bzw. 51c zwischen Einlassventil 6a bzw. 6c und Regelventil 145a bzw. 145b verbindbar. Der Druckanschluss der einen Pumpe 142 ist mit der Radbremse 8a, der Druckanschluss der anderen Pumpe 142 ist mit der Radbremse 8c, jeweils ohne Zwischenschaltung eines Ventils, verbunden.

Druckbereitstellungseinrichtung 105 saugt also Druckmittel aus dem zweiten Druckmittelvorratsbehälter 104 an und speist das von ihr abgegebene Druckmittel jeweils direkt (ohne zwischenliegende Ventile) in die Radbremse 8a und 8c ein.

Die Druckbereitstellungsfunktion der zweiten elektrohydraulischen Steuer- und Regeleinheit 160 arbeiten mittels der Ventile 145a und 145b, die jeweils das durch die Pumpen 142 eingespeiste Druckmittelvolumen durch entsprechende elektronische Ansteuerung druckregeln. Mittels der Ventile 146a, 146b kann überschüssiges Druckmittelvolumen, welches an den Ventilen 145a, 145b überströmt, der entsprechenden Pumpe 142 direkt wieder zur Verfügung gestellt werden.

Gemäß einem nicht dargestellten Ausführungsbeispiel der erfindungsgemäßen Bremsanlage sind die Ventile 146a, 146b und deren Verbindungsleitung nicht vorhanden. In diesem Ausführungsbeispiel fließt dann das überschüssige Druckmittelvolumen über die erste Steuer- und Regeleinheit 60 zum Druckmittelvorratsbehälter.

Die zweite Steuer- und Regeleinheit 160 umfasst beispielsgemäß einen Drucksensor 120 zur Erfassung des Eingangsdrucks in der Verbindung 51a sowie jeweils einen Drucksensor 119 zur Erfassung des Radbremsdruckes in der Radbremse 8a und 8c.

Der erste Druckmittelvorratsbehälter 4 dient also zur Versorgung der ersten elektrohydraulischen Steuer- und Regeleinheit 60, insbesondere des Hauptbremszylinders 2 und der ersten Druckbereitstellungseinrichtung 5.

Der zweite Druckmittelvorratsbehälter 104 dient zur Versorgung der zweiten elektrohydraulischen Steuer- und Regeleinheit 160, insbesondere der zweiten Druckbereitstellungseinrichtung 105.

Die erste elektronische Steuer- und Regeleinheit 60a (ECU1) dient zur Ansteuerung der Druckbereitstellungseinrichtung 5, der Ventile 23a, 23b, 26a, 26b, 32 zur Umschaltung zwischen "Brake-by-wire"-Betriebsart und Rückfallbetriebsart sowie der Ventile 6a-6d, 7a-7d der Druckmodulationseinrichtung 61. Der Steuer- und Regeleinheit 60a werden die Signale des Wegsensors 25, des Sensors 44 sowie der Drucksensoren 19 und 20 zugeführt.

Die zweite elektronische Steuer- und Regeleinheit 160a (ECU2) dient zur Ansteuerung der Druckbereitstellungseinrichtung 105 sowie der Ventile 142a, 142b, 146a, 146b, 147a, 147b. Der Steuer- und Regeleinheit 160a werden die Signale der Drucksensoren 119 und 120 zugeführt.

Zur Ausführung der Regelaufgabe werden Signale beispielsweise auch über einen oder mehrere Busse ausgetauscht. Je nach Ausführung kann es auch eine direkte Verbindung zwischen der ersten und der zweiten elektronischen Steuer- und Regeleinheit geben. Zur Absicherung der Funktionen wird die Füllstandsanzeige der zweiten Füllstandserfassungseinrichtung 9 bevorzugt direkt in die zweite elektronische Steuer- und Regeleinheit 160a eingelesen. Weiterhin können je nach Ausführung Radsensorsignale von der zweite elektronische Steuer- und Regeleinheit 160a eingelesen werden.

Die Signale der Füllstandserfassungseinrichtung 9 werden vorteilhafterweise der ersten elektronischen Steuer- und Regeleinheit 60a (ECU1) und die Signale der Füllstandserfassungseinrichtung 109 werden vorteilhafterweise der zweiten elektronischen Steuer- und Regeleinheit 160a (ECU2) zugeführt und dort verarbeitet.

Es sind vorteilhafterweise eine erste elektrische Energieversorgungseinheit 70 und eine zweite elektrische Energieversorgungseinheit 170, welche von der ersten Energieversorgungseinheit unabhängig ist, vorgesehen. Die erste elektrohydraulische Steuer- und Regeleinheit 60 wird von der ersten Energieversorgungseinheit 70 mit elektrischer Energie versorgt, wohingegen die zweite elektrohydraulische Steuer- und Regeleinheit 160 von der zweiten Energieversorgungseinheit 170 mit elektrischer Energie versorgt wird.

In einer Normalbetriebsart der Bremsanlage werden die Radbremsen 8a-8d mittels der erste Druckbereitstellungseinrichtung 5 der ersten elektrohydraulischen Steuer- und Regeleinheit 60 mit Bremsdruck versorgt. Im Falle eines Ausfalls der ersten Druckbereitstellungseinrichtung 5 oder der ersten elektrohydraulischen Steuer- und Regeleinheit 60 können die Radbremsen 8a, 8c mittels der zweiten Druckbereitstellungseinrichtung 105 der zweiten elektrohydraulischen Steuer- und Regeleinheit 160 mit Bremsdruck versorgt werden. So ist eine redundante, fremdangesteuerte bzw. elektrisch gesteuerte Bremsdruckerzeugung, z.B. für eine autonome Fahrfunktion, gewährleistet.

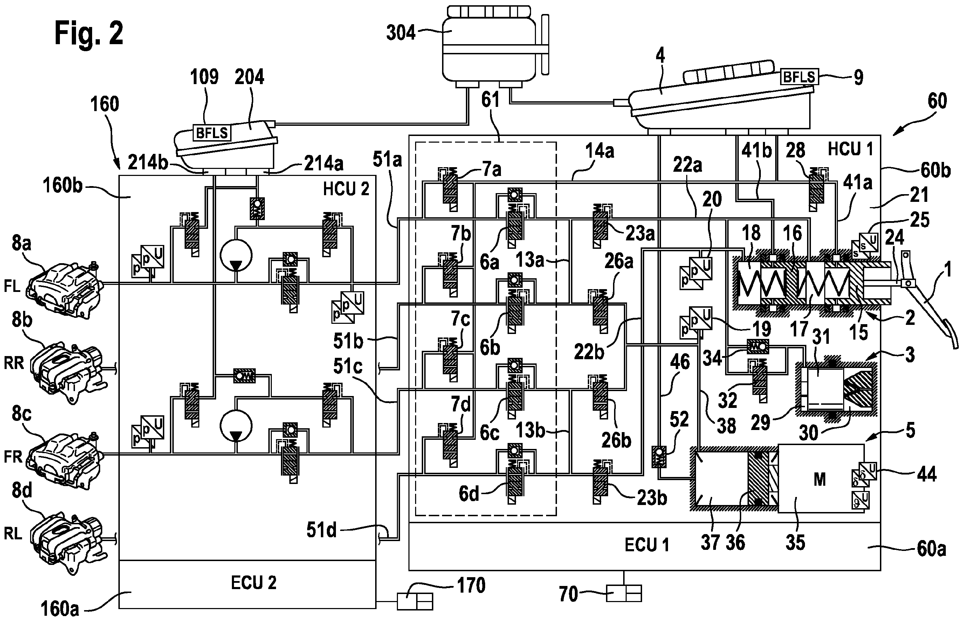

In Fig. 2 ist ein zweites Ausführungsbeispiel einer erfindungsgemäßen Bremsanlage schematisch dargestellt. Die Bremsanlage entspricht weitestgehend der Bremsanlage des ersten Ausführungsbeispiels und umfasst im Wesentlichen eine erste elektrohydraulische Steuer- und Regeleinheit 60, an der ein erster Druckmittelvorratsbehälter 4 angeordnet ist, und eine zweite elektrohydraulische Steuer- und Regeleinheit 160, an der ein zweiter Druckmittelvorratsbehälter 204 angeordnet ist. Die Steuer- und Regeleinheiten 60, 160 sind als getrennte Baueinheiten bzw. eigenständige Baugruppen ausgeführt. Während der zweite Druckmittelvorratsbehälter 104 des ersten Ausführungsbeispiels der Fig. 1 nur einen hydraulischen Anschluss 114 umfasst, an welchen beide Pumpensaugseiten angeschlossen sind, der Druckmittelvorratsbehälter 104 also in diesem Sinne einkreisig ausgeführt ist, ist der zweite Druckmittelvorratsbehälter 204 des zweiten Ausführungsbeispiels der Fig. 2 zweikreisig ausgeführt. Der zweite Druckmittelvorratsbehälter 204 umfasst einen ersten hydraulischen Anschluss 214a und einen zweiten hydraulischen Anschluss 214b, wobei jeder der Anschlüsse 214a, 214b mit genau einem der Sauganschlüsse der Pumpen 142 verbunden ist. Die übrigen Komponenten des zweiten Ausführungsbeispiels entsprechend denen des ersten Ausführungsbeispiels.

Vorteilhafterweise ist auch gemäß dem zweiten Ausführungsbeispiel für den ersten Druckmittelvorratsbehälter 4 und für den zweiten Druckmittelvorratsbehälter 104 jeweils eine Füllstandserfassungseinrichtung 9, 109 bzw. eine Füllstandswarneinrichtung vorgesehen, mittels welcher jeweils der Druckmittelfüllstand bzw. ein Fallen des Druckmittelfüllstandes unter ein vorgegebenen Niveau des jeweiligen Druckmittelvorratsbehälters 4, 204 erfasst wird.

Vorteilhafterweise ist der Druckmittelvorratsbehälter 204 der zweiten Steuer- und Regeleinheiten 160 derart ausgeführt, dass der Druckmittelvorratsbehälter 204 als Luftabscheider wirkt.

## Patentansprüche

1. Bremsanlage für ein Kraftfahrzeug zur Betätigung von hydraulisch betätigbaren Radbremsen (8a, 8b, 8c, 8d) mit einer ersten elektrohydraulischen Steuer- und Regeleinheit (60), welche
• einen mittels eines Bremspedals (1) betätigbaren Hauptbremszylinder (2), insbesondere zur Betätigung der Radbremsen (8a, 8b, 8c, 8d) in einer Rückfallbetriebsart,
• eine erste elektrisch steuerbare Druckbereitstellungseinrichtung (5), insbesondere zur Betätigung der Radbremsen in einer "Brake-by-wire"-Betriebsart,
• insbesondere eine Simulationseinrichtung (3), und
• eine elektrisch steuerbare Druckmodulationseinrichtung (61) zum Einstellen radindividueller Bremsdrücke für die Radbremsen mit zumindest einem elektrisch betätigbaren Einlassventil (6a-6d) für jede Radbremse,
umfasst, wobei an der ersten elektrohydraulischen Steuer- und Regeleinheit (60) ein erster, insbesondere unter Atmosphärendruck stehender, Druckmittelvorratsbehälter (4) zur Versorgung der ersten elektrohydraulischen Steuer- und Regeleinheit (60) mit Druckmittel angeordnet ist, und mit einer zweiten elektrohydraulischen Steuer- und Regeleinheit (160), welche
• eine zweite elektrisch steuerbare Druckbereitstellungseinrichtung (105) zur Betätigung zumindest eines Teils der Radbremsen (8a, 8c) und
• elektrisch betätigbare Ventile (145a, 145b, 146a, 146b, 147a, 147b)
umfasst, wobei die zweite Druckbereitstellungseinrichtung (105) zumindest zwei, von einem Elektromotor gemeinsam angetriebene hydraulische Pumpen (142) mit je einem Sauganschluss und einem Druckanschluss umfasst,
**dadurch gekennzeichnet, dass** ein zweiter, insbesondere unter Atmosphärendruck stehender, Druckmittelvorratsbehälter (104, 204) zur Versorgung der zweiten elektrohydraulischen Steuer- und Regeleinheit (160) mit Druckmittel vorgesehen ist, der an der zweiten elektrohydraulischen Steuer- und Regeleinheit (160) angeordnet ist, wobei jeder der Druckanschlüsse der zweiten Druckbereitstellungseinrichtung mit einer der Radbremsen (8a, 8c) ohne Zwischenschaltung eines Ventils verbunden ist.

2. Bremsanlage nach Anspruch 1, **dadurch gekennzeichnet, dass** der erste Druckmittelvorratsbehälter (4) und der zweite Druckmittelvorratsbehälter (104, 204) baulich getrennt ausgeführt sind.

3. Bremsanlage nach Anspruch 1 oder 2, **dadurch gekennzeichnet, dass** der erste Druckmittelvorratsbehälter (4) und der zweite Druckmittelvorratsbehälter (104, 204) jeweils eine Füllstandserfassungseinrichtung oder eine Füllstandswarneinrichtung (9, 109) umfassen.

4. Bremsanlage nach einem der Ansprüche 1 bis 3, **dadurch gekennzeichnet, dass** der zweite Druckmittelvorratsbehälter (104, 204) derart aufgebaut ist, dass er als Luftabscheider wirkt.

5. Bremsanlage nach einem der Ansprüche 1 bis 4, **dadurch gekennzeichnet, dass** eine erste elektrische Energieversorgungseinheit (70) und eine zweite elektrische Energieversorgungseinheit (170), welche von der ersten Energieversorgungseinheit unabhängig ist, vorgesehen ist, wobei die erste elektrohydraulische Steuer- und Regeleinheit (60) von der ersten Energieversorgungseinheit (70) mit elektrischer Energie versorgt wird und die zweite elektrohydraulische Steuer- und Regeleinheit (160) von der zweiten Energieversorgungseinheit (170) mit elektrischer Energie versorgt wird.

6. Bremsanlage nach einem der Ansprüche 1 bis 5, **dadurch gekennzeichnet, dass** die erste elektrohydraulische Steuer- und Regeleinheit (60) und die zweite elektrohydraulische Steuer- und Regeleinheit (160) im Kraftfahrzeug beabstandet angeordnet sind.

7. Bremsanlage nach einem der Ansprüche 1 bis 6, **dadurch gekennzeichnet, dass** jeder der Druckanschlüsse mit genau einer der Radbremse (8a, 8c) ohne Zwischenschaltung eines Ventils verbunden ist.

8. Bremsanlage nach einem der Ansprüche 1 bis 7, **dadurch gekennzeichnet, dass** der zweite Druckmittelvorratsbehälter (104) einen, insbesondere einzigen, hydraulischen Anschluss (114) umfasst, wobei die Sauganschlüsse der zweite Druckbereitstellungseinrichtung (105), insbesondere über je ein in Richtung des Sauganschlusses öffnendes Rückschlagventil (148a, 148b), mit dem Anschluss (114) verbunden sind.

9. Bremsanlage nach einem der Ansprüche 1 bis 7, **dadurch gekennzeichnet, dass** der zweite Druckmittelvorratsbehälter (204) einen ersten hydraulischen Anschluss (214a) und einen zweiten hydraulischen Anschluss (214b) umfasst, wobei der erste Anschluss (214a) mit dem Sauganschluss der einen Pumpe und der zweite Anschluss (214a) mit dem Sauganschluss der anderen Pumpe, insbesondere über je ein in Richtung des Sauganschlusses öffnendes Rückschlagventil (148a, 148b), verbunden ist.

10. Bremsanlage nach einem der Ansprüche 1 bis 9, **dadurch gekennzeichnet, dass** ein dritter, insbesondere unter Atmosphärendruck stehender, Druckmittelvorratsbehälter (304), der eine Befüllöffnung umfasst, zur Versorgung des ersten und des zweiten Druckmittelvorratsbehälters mit Druckmittel vorgesehen ist, welcher mit dem ersten und dem zweiten Druckmittelvorratsbehälter (4, 104, 204) verbunden ist.

11. Bremsanlage nach einem der Ansprüche 1 bis 9, **dadurch gekennzeichnet, dass** der erste Druckmittelvorratsbehälter (4) eine Befüllöffnung umfasst und zur Versorgung des zweiten Druckmittelvorratsbehälters (104, 204) mit Druckmittel mit dem zweiten Druckmittelvorratsbehälter verbunden ist.

## Claims

1. Braking system for a motor vehicle for actuating hydraulically actuated wheel brakes (8a, 8b, 8c, 8d) with
a first electrohydraulic control and regulating unit (60), which comprises
• a master brake cylinder (2) actuated by means of a brake pedal (1), in particular for actuating the wheel brakes (8a, 8b, 8c, 8d) in a fallback mode,
• a first electrically controlled pressure supply device (5), in particular for actuating the wheel brakes in a "brake-by-wire" operating mode,
• in particular a simulator (3), and
• an electrically controlled pressure modulator (61) for setting wheel-specific brake pressures for the wheel brakes with at least one electrically operated inlet valve (6a-6d) for each wheel brake,
wherein a first pressure medium reservoir (4), in particular at atmospheric pressure, for supplying the first electrohydraulic control and regulating unit (60) with pressure medium is disposed on the first electrohydraulic control and regulating unit (60),
and with a second electrohydraulic control and regulating unit (160), which comprises
• a second electrically controlled pressure supply device (105) for actuating at least some of the wheel brakes (8a, 8c) and
• electrically operated valves (145a, 145b, 146a, 146b, 147a, 147b),
wherein the second pressure supply device (105) comprises at least two hydraulic pumps (142) that are commonly driven by an electric motor, each with an intake port and a pressure port,
**characterized in that** a second pressure medium reservoir (104, 204), in particular at atmospheric pressure, for supplying the second electrohydraulic control and regulating unit (160) with pressure medium is provided, which is disposed on the second electrohydraulic control and regulating unit (160), wherein each of the pressure ports of the second pressure supply device is connected to one of the wheel brakes (8a, 8c) without the interposition of a valve.

2. Braking system according to Claim 1, **characterized in that** the first pressure medium reservoir (4) and the second pressure medium reservoir (104, 204) are implemented structurally separately.

3. Braking system according to Claim 1 or 2, **characterized in that** the first pressure medium reservoir (4) and the second pressure medium reservoir (104, 204) each comprise a level detector or a level alarm (9, 109).

4. Braking system according to any one of Claims 1 to 3, **characterized in that** the second pressure medium reservoir (104, 204) is designed such that it acts as an air separator.

5. Braking system according to any one of Claims 1 to 4, **characterized in that** a first electrical power supply unit (70) and a second electrical power supply unit (170), which is independent of the first power supply unit, are provided, wherein the first electrohydraulic control and regulating unit (60) is supplied with electrical energy by the first power supply unit (70) and the second electrohydraulic control and regulating unit (160) is supplied with electrical energy by the second power supply unit (170).

6. Braking system according to any one of Claims 1 to 5, **characterized in that** the first electrohydraulic control and regulating unit (60) and the second electrohydraulic control and regulating unit (160) are disposed spaced apart in the motor vehicle.

7. Braking system according to any one of Claims 1 to 6, **characterized in that** each of the pressure ports is connected to exactly one of the wheel brakes (8a, 8c) without the interposition of a valve.

8. Braking system according to any one of Claims 1 to 7, **characterized in that** the second pressure medium reservoir (104) comprises an especially single hydraulic port (114), wherein the intake ports of the second pressure supply device (105) are connected to the port (114), in particular via a respective non-return valve (148a, 148b) that opens towards the intake port.

9. Braking system according to any one of Claims 1 to 7, **characterized in that** the second pressure medium reservoir (204) comprises a first hydraulic port (214a) and a second hydraulic port (214b), wherein the first port (214a) is connected to the intake port of one pump and the second port (214a) is connected to the intake port of the other pump, in particular via a respective non-return valve (148a, 148b) that opens towards the intake port.

10. Braking system according to any one of Claims 1 to 9, **characterized in that** a third pressure medium reservoir (304), in particular at atmospheric pressure, which comprises a filling opening, is provided for supplying the first and the second pressure medium reservoirs with pressure medium and is connected to the first and the second pressure medium reservoirs (4, 104, 204).

11. Braking system according to any one of Claims 1 to 9, **characterized in that** the first pressure medium reservoir (4) comprises a filling opening and is connected to the second pressure medium reservoir for supplying the second pressure medium reservoir (104, 204) with pressure medium.

## Revendications

1. Système de freinage pour un véhicule automobile pour l'actionnement de freins de roues (8a, 8b, 8c, 8d) pouvant être actionnés hydrauliquement avec une première unité de commande et de réglage électrohydraulique (60) qui comprend
- un cylindre de frein principal (2) pouvant être actionné au moyen d'une pédale de frein (1), en particulier pour l'actionnement des freins de roue (8a, 8b, 8c, 8d) dans un type de fonctionnement de retour,
- un premier dispositif d'alimentation en pression pouvant être commandé électriquement (5), en particulier pour l'actionnement des freins de roue dans un type de fonctionnement à freinage électronique,
- en particulier un dispositif de simulation (3), et
- un dispositif de modulation de pression pouvant être commandé électriquement (61) pour l'ajustement de pressions de freinage individuelles pour chaque roue pour les freins de roues avec au moins une soupape d'admission (6a-6d) pouvant être actionnée électriquement pour chaque frein de roue,
un premier réservoir de fluide sous pression (4) notamment soumis à la pression atmosphérique, pour l'alimentation de la première unité de commande et de réglage électrohydraulique (60) en fluide sous pression étant disposé au niveau de la première unité de commande et de réglage électrohydraulique (60),
et avec une deuxième unité de commande et de réglage électrohydraulique (160) laquelle comprend
- un deuxième dispositif d'alimentation en pression pouvant être commandé électriquement (105) pour l'actionnement d'au moins une partie des freins de roues (8a, 8c) et
- des soupapes pouvant être actionnées électriquement (145a, 145b, 146a, 146b, 147a, 147b),
le deuxième dispositif d'alimentation en pression (105) comprenant au moins deux pompes hydrauliques (142) entraînées en commun par un moteur électrique, ayant chacune un raccord d'aspiration et un raccord de pression,
**caractérisé en ce qu'**il est prévu un deuxième réservoir de fluide sous pression (104, 204) notamment soumis à la pression atmosphérique, pour l'alimentation de la deuxième unité de commande et de réglage électrohydraulique (160) en fluide sous pression, lequel est disposé au niveau de la deuxième unité de commande et de réglage électrohydraulique (160), chacun des raccords de pression du deuxième dispositif d'alimentation en pression étant connecté à l'un des freins de roues (8a, 8c) sans interposition d'une soupape.

2. Système de freinage selon la revendication 1, **caractérisé en ce que** le premier réservoir de fluide sous pression (4) et le deuxième réservoir de fluide sous pression (104, 204) sont réalisés sous forme séparée physiquement.

3. Système de freinage selon la revendication 1 ou 2, **caractérisé en ce que** le premier réservoir de fluide sous pression (4) et le deuxième réservoir de fluide sous pression (104, 204) comprennent chacun un dispositif de détection de niveau de remplissage ou un dispositif d'avertissement de niveau de remplissage (9, 109).

4. Système de freinage selon l'une quelconque des revendications 1 à 3, **caractérisé en ce que** le deuxième réservoir de fluide sous pression (104, 204) est construit de manière à fonctionner en tant que séparateur d'air.

5. Système de freinage selon l'une quelconque des revendications 1 à 4, **caractérisé en ce qu'**une première unité d'alimentation en énergie électrique (70) et une deuxième unité d'alimentation en énergie électrique (170) qui est indépendante de la première unité d'alimentation en énergie sont prévues, la première unité de commande et de réglage électrohydraulique (60) étant alimentée en énergie électrique par la première unité d'alimentation en énergie (70) et la deuxième unité de commande et de réglage électrohydraulique (160) étant alimentée en énergie électrique par la deuxième unité d'alimentation en énergie (170).

6. Système de freinage selon l'une quelconque des revendications 1 à 5, **caractérisé en ce que** la première unité de commande et de réglage électrohydraulique (60) et la deuxième unité de commande et de réglage électrohydraulique (160) sont disposées à distance l'une de l'autre dans le véhicule automobile.

7. Système de freinage selon l'une quelconque des revendications 1 à 6, **caractérisé en ce que** chacun des raccords de pression est connecté exactement à l'un des freins de roues (8a, 8c) sans interposition d'une soupape.

8. Système de freinage selon l'une quelconque des revendications 1 à 7, **caractérisé en ce que** le deuxième réservoir de fluide sous pression (104) comprend un raccord hydraulique (114), notamment unique, les raccords d'aspiration du deuxième dispositif d'alimentation en pression (105) étant connectés au raccord (114), notamment par le biais d'un clapet antiretour (148a, 148b) s'ouvrant dans la direction du raccord de pression.

9. Système de freinage selon l'une quelconque des revendications 1 à 7, **caractérisé en ce que** le deuxième réservoir de fluide sous pression (204) comprend un premier raccord hydraulique (214a) et un deuxième raccord hydraulique (214b), le premier raccord (214a) étant connecté au raccord d'aspiration de l'une des pompes et le deuxième raccord (214a) étant connecté au raccord d'aspiration de l'autre pompe, en particulier à chaque fois par le biais d'un clapet antiretour (148a, 148b) s'ouvrant dans la direction du raccord d'aspiration.

10. Système de freinage selon l'une quelconque des revendications 1 à 9, **caractérisé en ce qu'**un troisième réservoir de fluide sous pression (304), notamment soumis à la pression atmosphérique, qui comprend une ouverture de remplissage, est prévu pour l'alimentation en fluide sous pression du premier et du deuxième réservoir de fluide sous pression, lequel est connecté au premier et au deuxième réservoir de fluide sous pression (4, 104, 204).

11. Système de freinage selon l'une quelconque des revendications 1 à 9, **caractérisé en ce que** le premier réservoir de fluide sous pression (4) comprend une ouverture de remplissage et est connecté au deuxième réservoir de fluide sous pression pour l'alimentation en fluide sous pression du deuxième réservoir de fluide sous pression (104, 204).
